# EUROPÄISCHE PATENTSCHRIFT

(11) **EP 1 247 329 B1**
(45) Veröffentlichungstag und Bekanntmachung des Hinweises auf die Patenterteilung: **30.01.2008**
(21) Anmeldenummer: 00988680.5
(22) Anmeldetag: 01.12.2000
(51) Int. Cl.: H02M 5/27, H02M 1/08

(54) **VERFAHREN ZUR STEUERUNG BIDIREKTIONALER SCHALTER IN MATRIXUMRICHTERN**
METHOD FOR CONTROLLING BI-DIRECTIONAL SWITCHES IN MATRIX CONVERTERS
PROCEDE POUR COMMANDER DES COMMUTATEURS BIDIRECTIONNELS DANS DES CONVERTISSEURS MATRICIELS

(30) Priorität: 03.12.1999 DE 19958041
(43) Veröffentlichungstag der Anmeldung: 09.10.2002
(73) Patentinhaber: SIEMENS AKTIENGESELLSCHAFT, 80333 München (DE)
(72) Erfinder: ZIEGLER, Marcus, 36088 Hünfeld (DE); HOFMANN, Wilfried, 01109 Dresden (DE)
(86) Internationale Anmeldenummer: PCT/DE2000/004285
(87) Internationale Veröffentlichungsnummer: WO 2001/041290

(56) Entgegenhaltungen:
- DE-A- 19 746 797
- CITTADINI R ET AL: "A MATRIX CONVERTER SWITCHING CONTROLLER FOR LOW LOSSES OPERATION WITHOUT SNUBBER CIRCUITS" EPE. EUROPEAN CONFERENCE ON POWER ELECTRONICS AND APPLICATIONS,B,BRUSSELS, EPE ASSOCIATION, Bd. CONF. 7, 1997, Seiten 199-203, XP000881443 ISBN: 90-75815-02-6 in der Anmeldung erwähnt
- NANDOR BURANY: "SAFE CONTROL OF FOUR-QUADRANT SWITCHES" CONFERENCE RECORD OF THE INDUSTRY APPLICATIONS SOCIETY ANNUAL MEETING. (IAS),US,NEW YORK, IEEE, Bd. CONF. 24, 1. Oktober 1989 (1989-10-01), Seiten 1190-1194, XP000091686 in der Anmeldung erwähnt
- PAN C-T ET AL: "A Zero Switching Loss Matrix Converter" IEEE PESC, 1993, Seiten 545-550, XP001006042 in der Anmeldung erwähnt
- CHO J G ET AL: "Soft-Switched Matrix Converter for High Frequency Direct AC-toAC Power Conversion" EPE, Seite 1991 XP001006097 in der Anmeldung erwähnt
- SVENSSON: "The Modulation and Control of a Matrix Converter Synchronous Machine Drive" EPE, 1991, XP001006098 in der Anmeldung erwähnt

## Beschreibung

Die Erfindung betrifft ein Verfahren zur Steuerung bidirektionaler Schalter in Stromrichtern mit getrennten Steuersignalen für beide Stromrichtungen, vorzugsweise 3x3 Matrixumrichtern.
Eine Reihe von Verfahren zur Stromkommutierung in Matrixumrichtern setzt auf eine Erweiterung der Grund-Topologie durch zusätzliche betriebsmäßig laststromführende Bauteile. Bekannt geworden sind höherfrequente Resonanzkreise (IEEE PESC 1993, p.545-550) /1/ und (EPE 1991, p.196-201) /2/, Freilaufzweige (Dissertation Söhner, Universtität Karlsruhe 1993) /3/ oder parallelgeschaltete Kondensatoren (EPE 1991, p.469-476) /4/.
Nachteilig an den Anordnungen mit höherfrequenten Resonanzkreisen sind die betriebsmäßig laststromführenden zusätzlichen Bauelemente sowie ein notwendiges zeitgenaues Schalten im Nulldurchgang des hochfrequenten Stromes oder der Spannung. Beliebige Schaltzeitpunkte sind nicht wählbar, was Totzeiten zur Folge hat. Eine aktive Bedämpfung der für Matrixumrichter typischen Schwingungen an Eingangsfiltern ist nur eingeschränkt möglich. Nachteilig an den Lösungen nach /3/ und /4/ sind ebenfalls die betriebsmäßig stromführenden zusätzlichen Bauteile, wie B6-Brücken, Zwischenkreiskapazität mit Einrichtungen zur Spannungsbegrenzung, z.B. Bremschopper, bzw. Kondensatoren parallel zu den Schaltern sowie die dadurch auftretenden zusätzlichen Verluste.
Dagegen sind vier Verfahren bekannt, die keine zusätzlichen betriebsmäßig laststromführenden Bauteile erfordern und getrennte Steuersignale für beide Stromrichtungen nutzen (bidirektionaler Schalter, auch als Vierquadrantenschalter bekannt, bestehend aus einer Antiparallelschaltung zweier Zweiquadrantenschalter, auch als unidirektionale Schalter bezeichnet): zwei Vier-Schrittverfahren mit Messung der Kommutierungsspannung bzw. der Laststromrichtung vor jedem Schaltschritt (IEEE-Industry Application Society 1989 p. 1190-1194) /5/, ein Verfahren, das die Kommutierung zwischen nur zwei Eingangsphasen in zwei Schritten ermöglicht (EPE 1997 p. 4.199-4.203) /6/ und ein Verfahren, das in zwei Schritten arbeitet (Deutsche Patentanmeldung 19746797.0-32) /7/.
Charakteristisch für die letztgenannten Verfahren ist ein Schaltalgorithmus in zwei oder vier Schritten. Ausgangspunkt für die Schaltabfolge ist entweder die Ermittlung des Vorzeichens der Kommutierungsspannung zwischen den beiden am Schaltvorgang beteiligten Phasen oder die Ermittlung des Vorzeichens des Stromes im aktuell leitenden Schalter. Zwischen den Schritten müssen Sicherheitszeiten, die im wesentlichen durch die Schaltzeiten der Leistungshalbleiter sowie deren Ansteuereinrichtungen bestimmt sind, eingehalten werden.
Der wesentliche Nachteil der letztgenannten vier Verfahren liegt in einer erforderlichen exakten Erfassung der Stromrichtung oder der Kommutierungsspannung. Dies ist insbesondere schwierig im Bereich kleiner Werte. So betrifft das im Falle einer Strommessung den Stromnulldurchgang und im Falle einer Spannungsmessung den Nulldurchgang der verketteten Spannungen. Eine falsche Messung, beispielsweise aufgrund von Offsetfehlern durch Restmagnetismus im Meßwandler, Störungen oder Schwankungen/Schwingungen der Eingangsphasenspannungen führt zu einem kurzzeitigen Kurzschluß zweier Netzphasen oder zur Unterbrechung des Ausgangsstroms. Beides kann zur Zerstörung von Schalterelementen des Umrichters führen, insbesondere beim Verfahren mit Erfassung der Stromrichtung. Der Trend zu Bauelementen mit niedriger Schwellspannung wie z.B. Cool MOS zur Vermeidung von hohen Durchlaßverlusten kann bereits bei niedrigen Kommutierungsspannungen zu hohen Kurzschlußströmen führen.

Kennzeichnend für die beiden Vierschritt-Verfahren nach /5/ ist, daß zwei unidirektionale Schalter aus und zwei eingeschaltet werden.
Ein weiterer Nachteil der Verfahren nach /5/ sind die in jedem Falle notwendigen vier Schaltschritte, was diese Verfahren für bei Matrixumrichtern wünschenswerten schnellen Umschaltvorgängen weniger geeignet macht. Matrixumrichter sind insbesondere zur aktiven Dämpfung der Netzfilterschwingungen und aufgrund fehlender Energiespeicher auf schnelle Umschaltvorgänge angewiesen.
Nachteilig ist des weiteren, daß nach Erfassung der Stromrichtung/Kommutierungsspannung vor dem ersten Schaltschritt die folgenden Schaltschritte zwangsweise ablaufen, ohne daß auf eine Änderung des Vorzeichens der Stromrichtung/Kommutierungsspannung reagiert werden kann, was während des gesamten Umschaltvorgangs in vier Schritten kurzzeitig einen Kurzschluß bzw. einen lückenden Strom zur Folge haben kann.
Das Verfahren nach /6/ führt zwangsweise zu kurzzeitigen Kurzschlüssen. Zudem ist eine Kommutierung nur zwischen zwei Eingangsphasen berücksichtigt.

Aufgabe der Erfindung ist es deshalb, bidirektionale Schalter mit getrennten Steuersignalen für beide Stromrichtungen vorzugsweise in 3x3 Matrixumrichtern bei einem Minimum zu schaltender unidirektionaler Schalter je Kommutierungsvorgang so anzusteuern, daß:
- keine Unterbrechung der Last-/Ausgangsströme entstehen können, auch wenn der Strom sehr klein ist
- kein Kurzschluß entstehen kann, auch wenn die verketteten Eingangsspannungen sich in der Umgebung eines Nulldurchgangs befinden,
- ohne zusätzliche betriebsmäßig laststromführende Bauteile eine Kommutierung in möglichst wenigen Schalt-Schritten möglich ist,
- eine freizügige Festlegung der Umschaltzeitpunkte vorgenommen werden kann,
- der Laststrom zu allen Eingangsphasen kommutiert werden kann
- zu jedem Zeitpunkt, auch während des Umschaltens, ein Freilaufzweig für beide Stromrichtungen vorhanden ist.

Die Aufgabe wird entsprechend den Merkmalen der Ansprüche 1 bis 7 gelöst. Durch das erfindungsgemäße Steuerverfahren ergeben sich gegenüber dem Stand der Technik folgende Vorteile:
1. Bei entsprechender Wahl von Intervallanfang und Intervallende toleriert das Verfahren große Abweichungen bei der Erfassung der Kommutierungsspannug.
2. Bei entsprechender Wahl von Intervallanfang und Intervallende funktioniert das Verfahren auch im Bereich des Stromnulldurchgangs, d.h. bei kleinen Strömen.
3. Bei entsprechender Wahl von Intervallanfang und Intervallende kann eine Netzphase einen Spannungseinbruch, bzw. einen Kurzschluß haben ohne Folgen für die Kommutierung.
4. Zusätzliche betriebsmäßig laststromführende Bauteile sind nicht notwendig.
5. Ein Umschalten zwischen dem Basis-Hauptzustand und den beiden anderen Neben-Hauptzuständen erfolgt in nur zwei Schritten, wobei in einem Schaltschritt zwei unidirektionale Schalter ab- bzw. eingeschaltet und im anderen Schritt nur ein unidirektionaler Schalter ein- bzw. abgeschaltet wird.
6. Schaltvorgänge können zu beliebigen Zeitpunkten, auch mit hohen Folgefrequenzen, erfolgen, wodurch Totzeiten praktisch vermieden werden und die Regeldynamik günstig beeinflußt wird.
7. Zu jedem beliebigen Zeitpunkt, also auch während des Umschaltens, existiert ein Freilaufzweig für beide Stromrichtungen.
8. Die Realisierung des erfindungsgemäßen Steuerverfahrens macht lediglich die Erfassung der Eingangsphase mit der maximalen oder minimalen Spannung erforderlich, z.B. im Dreiphasensystem die Erfassung der sich zyklisch wiederholenden sechs Vorzeichenwechsel der Phasenspannugen.
9. Das vorgeschlagene Steuerverfahren ist bei praktisch beliebigen Frequenzen des speisenden Netzes anwendbar; Einschränkungen bei höheren Frequenzen ergeben sich lediglich aus Schaltzeiten der elektronischen Bauteile.

Anhand von schematischen Ausführungsbeispielen, die sich im wesentlichen auf den 3x3 Matrixumrichter beziehen, wird die Erfindung nachstehend näher beschrieben, wobei auf die Figuren der Zeichnung Bezug genommen wird.
Es zeigen
- Fig.1: einen idealen 3x3 Matrixumrichter,
- Fig.2: Beispiel zur Nutzung des Verfahrens bei der Einteilung in 60°- Intervalle im dreisträngigen Mehrphasensystem,
- Fig.3: Beispiel zur Nutzung des Verfahrens im Bereich des Nulldurchgangs der verketteten Spannungen
- Fig.4: beispielhafte Ausführung eines bidirektionalen Schalters mit den vier Zuständen:
a.) bidirektionaler Schalter ausgeschaltet,
b.) bidirektionaler Schalter eingeschaltet,
c.) undidirektionaler Schalter in Vorwärtsrichtung eingeschaltet,
d.) unidirektionaler Schalter in Rückwärtsrichtung eingeschaltet,
- Fig.5: eine Tabelle aller konkreten Schaltzustände für Teilstromrichter 1 für die Kommutierung zwischen dem Basis- und dem Neben-Hauptzustand in nur zwei Schritten, wobei eine "1" einen eingeschalteten unidirektionalen Schalter kennzeichnet
- Fig.6: eine Tabelle aller konkreten Schaltzustände für Teilstromrichter 1 zur möglichen Kommutierung in vier Schritten zwischen zwei Neben-Hauptzuständen, wobei eine "1" einen eingeschalteten unidirektionalen Schalter kennzeichnet
- Fig.7: Kommutierungsbeispiel für Intervall 2, Iₒ>0, Vᵢ₁>Vᵢ₂, Vᵢ₁>Vᵢ₃.
- Fig.8: Kommutierungsbeispiel für Intervall 3, Iₒ>0, Vᵢ₃<Vᵢ₁, Vᵢ₃<Vᵢ₂.

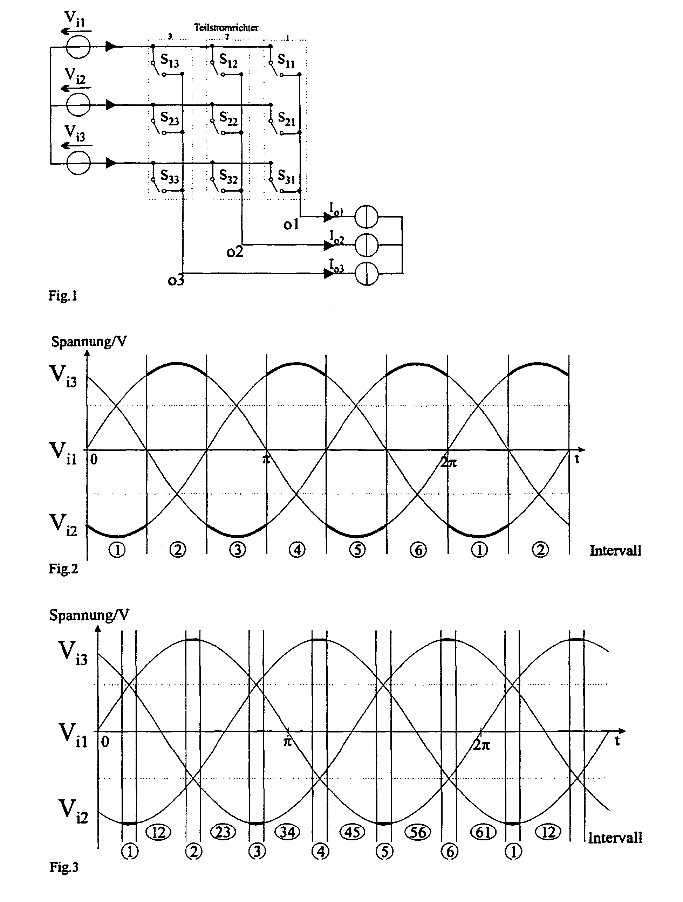

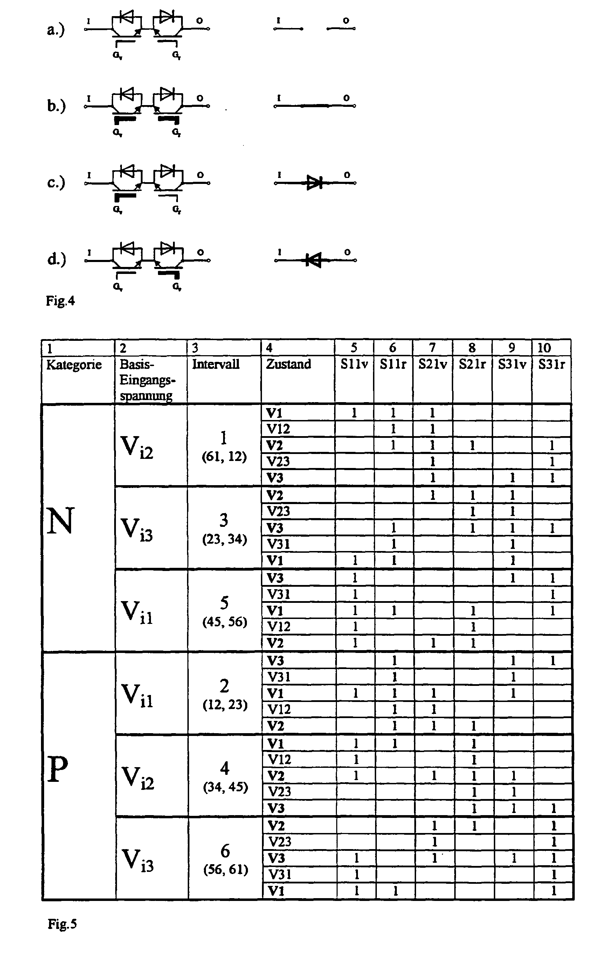

Die Basis des erfindungsgemäßen Steuerverfahrens bildet die Erfassung der sogenannten Basis-Eingangsphase deren Phasenspannung (Vᵢ₁, Vᵢ₂, Vᵢ₃) innerhalb eines bestimmten Intervalls immer größer (Kategorie P) oder kleiner (Kategorie N) als die beiden anderen ist. Das Vorzeichen der verketteten Spannung der beiden anderen sogenannten Neben-Eingangsphasen mit den entsprechenden Eingangsstrangspannungen kann beliebig sein, d.h. es kann sich auch innerhalb des Intervalls ändern, selbst während einer Kommutierung. Es ergibt sich beispielsweise für ein dreisträngiges Mehrphasensystem eine Einteilung in 60°-Intervalle 1...6, wie sie in Fig.2 dargestellt sind. Ein Intervall beginnt mit dem Nulldurchgang einer Eingangsstrangspannung und endet mit dem folgenden Nulldurchgang einer anderen Eingangsstrangspannung. Innerhalb eines Intervalls muß die Zuordnung von Eingangsphase zu Basis- und Neben-Eingangsphase gleich bleiben. Die Zuordnung der Eingangsphasen zur entsprechenden Kategorie, bzw. zur Basis-Eingangsphase in Abhängigkeit vom Intervall zeigen die Spalten 1-3 in Fig.5. So ist z.B. zu erkennen, daß im Intervall 4 die Eingangsphase mit der Spannung Vᵢ₂ immer die größte Spannung besitzt und damit Basis-Eingangsstrangspannung der Kategorie P ist, und daß die Netzphase Vᵢ₁ und die Netzphase Vᵢ₃ Neben-Eingangsphasen sind, da das Vorzeichen der verketteten Spannung Vᵢ₃-Vᵢ₁ im Intervall nicht eindeutig ist bzw. sich das Vorzeichen ändert.

Die Kommutierung nach dem erfindungsgemäßen Steuerverfahren wird beispielhaft für einen Teilstromrichter des idealen 3x3 Matrixumrichters nach Fig.1 erläutert. Ein Teilstromrichter besteht aus drei bidirektionalen Schaltern, die jede der drei Eingangsphasen mit einer Ausgangsphase verbinden können. Damit sind die drei Teilstromrichter identisch.
Die Bezeichnung der unidirektionalen Einzelschalter erfolgt nach der folgenden Konvention:

| S | Schalter |
|---|---|
| 1. Index | Ziffer der Eingangsphase |
| 2. Index | Ziffer der Ausgangsphase |
| 3. Index | mögliche Stromrichtung im unidirektionalen Schalter: |
| | "v" vorwärts, "r" rückwärts |

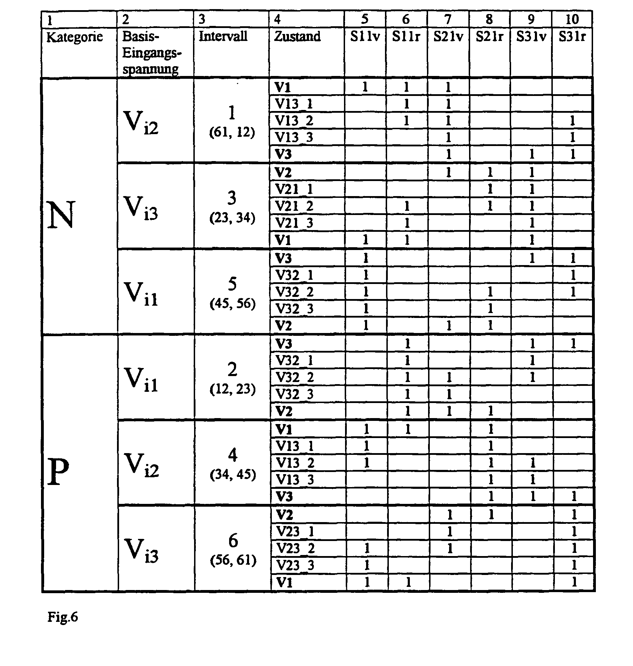

Ein bidirektionaler Schalter kann die vier in Fig.4 dargestellten Schalt-Zustände annehmen. Fett hervorgehobene Gates kennzeichnen einen eingeschalteten IGBT; nicht fett hervorgehobene einen ausgeschalteten. Stromwege sind im folgenden ebenfalls fett hervorgehoben.
Zu jedem Zeitpunkt, bzw. in jedem Intervall existiert eine Basis-Eingangsphase. Für einen solchen Fall können jeweils drei Hauptzustände V1, V2 und V3 gefunden werden, die keinen Kurzschluß zwischen zwei Eingangsphasen verursachen (In Fig.5 und Fig.6, Spalte 4, fett hervorgehobene Zeilen). Jeder Hauptzustand stellt eine bidirektionale Verbindung zwischen einer Ausgangsphase (z.B. ol) und der Soll-Eingangsphase her, Zustand V1 mit der Eingangsstrangspannung Vᵢ₁, Zustand V2 mit der Eingangsstrangspannung Vᵢ₂ und V3 mit der Eingangsstrangspannung Vᵢ₃. Bei den Hauptzuständen wird in den Basis-Hauptzustand, der die bidirektionale Verbindung mit der Basis-Eingangsphase herstellt, und die beiden Neben-Hauptzustände unterschieden. Zusätzlich sind in den Hauptzuständen sogenannte redundante unidirektionale Schalter geschlossen. In den Neben-Hauptzuständen ist zusätzlich einer der unidirektionalen Schalter zwischen Last und Basis-Eingangsphase eingeschaltet, in der Kategorie N der unidirektionale Schalter in Vorwärtsrichtung und in der Kategorie P der in Rückwärtsrichtung. Beim Basis-Hauptzustand sind zwei zusätzliche unidirektionale Schalter geschlossen, da in dem Basis-Hauptzustand der Kategorie N alle unidirektionalen Schalter in Rückwärtsrichtung eingeschaltet sind und in der Kategorie P alle unidirektionalen Schalter in Vorwärtsrichtung. Somit sind im Basis-Hauptzustand 4 unidirektionale Schalter eingeschaltet und im Neben-Hauptzustand 3 unidirektionale Schalter.

In einem Basis-Hauptzustand sind folglich in einem Teilstromrichter unter der Voraussetzung von n Eingangsphasen n+1 unidirektionale Schalter geschlossen, d.h. in einem Teilstromrichter des 3x3 Matrixumrichter sind in den Basis-Hauptzuständen immer vier unidirektionale Schalter geschlossen und zwei offen. In den Neben-Hauptzuständen hingegen sind 3 unidirektionale Schalter geschlossen, die bidirektionale Verbindung zur Soll-Eingangsphase und abhängig von der Kategorie N, bzw. P den unidirektionalen Schalter in Vorwärtsrichtung, bzw. in Rückwärtsrichtung zur Basis-Eingangsstrangspannung.

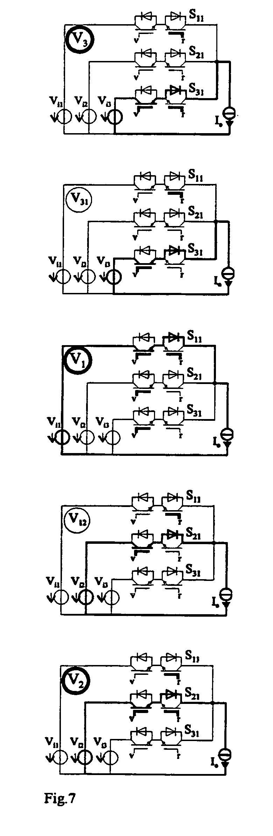

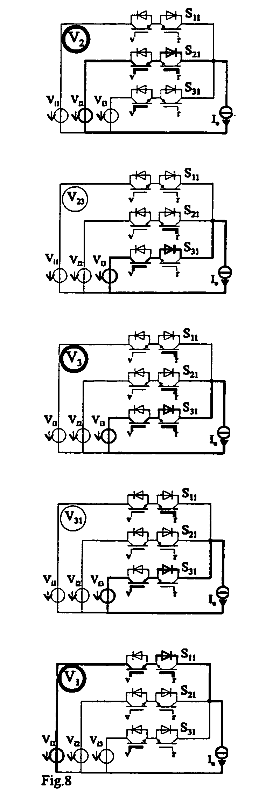

Die Kommutierung zwischen einem Basis-Hauptzustand und einem Neben-Hauptzustand, d.h. die Kommutierung des Ausgangsstromes zwischen einer Basis-Eingangsphase und einer Neben-Eingangsphase, ist stets in nur zwei Schritten möglich:
1. Abschalten der (des) unidirektionalen Schalter(s), die (der) für den Ziel-Hauptzustand nicht notwendig sind (ist)
2. Einschalten der (des) unidirektionalen Schalter(s), die (der) für den Ziel-Hauptzustand notwendig sind (ist)
Für die Kommutierung zwischen den Basis-Hauptzuständen und den Neben-Hauptzuständen müssen in einem Schaltschritt zwei unidirektionale Schalter ab- bzw. eingeschaltet und im anderen Schritt nur ein unidirektionaler Schalter ein- bzw. abgeschaltet werden (siehe beispielhaft in Fig. 7 und Fig.8).
Nach dem Schritt 1 wird für die Dauer einer Sicherheitszeit, die im wesentlichen durch die Schaltzeiten der Ventile sowie deren Ansteuereinrichtungen bestimmt wird, ein Zwischenzustand (V12, V23, V31) erreicht. Die eingeschalteten unidirektionalen Schalter im Zwischenzustand bilden die Schnittmenge der eingeschalteten Schalter des Referenz-Hauptzustandes und des Ziel-Hauptzustandes. Schaltet man z.B. im Intervall 4 zwischen den Eingangsspannungen Vᵢ₂ und Vᵢ₃, entsprechend den Zuständen V2 und V3 (siehe auch Fig.5), so bleiben die beiden Schalter S₂₁ᵣ und S₃₁ᵥ durchgehend eingeschaltet und stellen einen Strompfad für beide Stromrichtungen zur Verfügung, während S₁₁ᵥ und S₂₁ᵥ im ersten Schritt abgeschaltet werden und S₃₁ᵣ im zweiten Schritt eingeschaltet wird.

Die Kommutierung von einem Neben-Hauptzustand in einen anderen Neben-Hauptzustand erfolgt wahlweise in 4 Schritten. Entweder nach Fig.5, nach der Reihenfolge der Zustände in Spalte 4, beispielsweise V1, V12, V2, V23, V3 und umgekehrt für Intervall 1; oder nach Fig.6 nach der Reihenfolge der Zustände in Spalte 4, beispielsweise V1, V13_1, V13_2, V13_3, V3 und umgekehrt für Intervall 1.

In Fig.3 ist ein weiteres Beispiel zur Einteilung der Intervalle dargestellt, um das vorgeschlagene Verfahren im Bereich des Nulldurchgangs der verketteten Spannungen zu nutzen. In den Zwischenintervallen (12,23,34,45,56,61) können dann wahlweise bereits bekannte oder das vorliegende Kommutierungsverfahren verwendet werden. Verwendet man das vorliegende Verfahren, so hat man im Idealfall (Die Vorzeichen der Kommutierungsspannungen ändern sich nicht innerhalb eines Intervalls) zwei Möglichkeiten zur Wahl einer Basis-Eingangsphase. So kann man beispielsweise im Falle des Zwischenintervalls 23 in der Kategorie N die Eingangsspannung Vᵢ₃ als Basis-Eingangsphase wählen oder in der Kategorie P die Eingangsspannung Vᵢ₁. Die entsprechenden Schaltzustände aus Fig.5 und Fig.6 resultieren, wobei für die Zwischenintervalle dann die in Klammern gesetzten Intervallbezeichnungen in Spalte 3 gültig sind. Die Intervallgrenzen lassen sich offensichtlich innerhalb eines großen Bereichs verschieben, solange die Basis des erfindungsgemäßen Steuerverfahrens erfüllt ist.
Das Beispiel zeigt die Flexibilität des Verfahrens und damit die Möglichkeit einer extrem einfachen Realisierung einer Synchronisation auf die Intervallgrenzen.

Ein kennzeichnendes Merkmal des erfindungsgemäßen Steuerverfahrens wird deutlich, wenn man die Schnittmenge aller Haupt- und/oder Zwischenzustände innerhalb eines Intervalls bildet, was in der Kategorie N zu dem unidirektionalen Schalter von der Basis-Eingangsphase in Vorwärtsrichtung und in der Kategorie P zum unidirektionalen Schalter der Basis-Eingangsphase in Rückwärtsrichtung führt. Innerhalb eines Intervalls ist folglich ein unidirektionaler Schalter immer geschlossen.
Ein weiteres Merkmal ist, daß alle Zustände (Haupt- und Zwischenzustände) einen eingeschalteten unidirektionalen Schalter in Vorwärtsrichtung und einen eingeschalteten unidirektionalen Schalter in Rückwärtsrichtung beinhalten. Ein Lücken oder eine Unterbrechung des Laststromes wird somit innerhalb eines Intervalls vermieden.

Das offenbarte erfindungsgemäße Verfahren zur Steuerung bidirektionaler Schalter in Stromrichtern, insbesondere Matrixumrichtern, ist von der Anzahl der Schritte je Kommutierungsvorgang (Zwei-Schritt-Verfahren, Vier-Schritt-Verfahren) unabhängig.

### Literatur

[1] Pan C.T.: A zero switching loss matrix converter. 1993, IEEE PESC, p.545-550
[2] Cho J.G.: Soft switched Matrixconverter for high frequency direct AC to AC power conversion. 1991, EPE, p.196-201.
[3] Söhner W.: Der selbstgeführte Direktumrichter und seine Anwendung als MatrixConverter zur Speisung von drehzahlgeregelten Antrieben mit Asynchronmaschinen. 1993, Dissertation, Uni Karlsruhe
[4] Svensson T.: The modulation and control of a Matrix Converter - Synchronous Machine Drive. 1991. EPE p. 469-476.
[5] Burany N.: Safe control of 4 Quadrant Switches. 1989. IEEE-Industry Application Society, p. 1190-1194.
[6] Cittadini R.; Husselstein J-J.; Glaize C.: A matrix converter switching controller for low losses operation without snubber circuits. 1997. EPE p. 4.199-4.203.
[7] Ziegler M., Hofmann W.: Verfahren zur Steuerung bidirektionaler Schalter in Stromrichtern. 1997*,* Deutsche Patentanmeldung DE 19746797 A.

## Patentansprüche

1. Verfahren zur Steuerung bidirektionaler Schalter in Stromrichtern mit getrennten Steuersignalen für beide Stromrichtungen, vorzugsweise 3x3 Matrixumrichter,
**dadurch gekennzeichnet,**
**daß** ein Umschaltvorgang von einem Basis-Hauptzustand (V1, V2, V3) in einen Neben-Hauptzustand und umgekehrt nach einem spannungsgesteuerten Zwei-Schritt-Verfahren ohne die Verwendung zusätzlicher betriebsmäßig laststromführender Bauteile erfolgt und daß nach einem ersten Schritt alle unidirektionalen Schalter außer der Schnittmenge aus Referenz-Hauptzustand und Ziel-Hauptzustand abgeschaltet sind und daß nach einem zweiten Schritt alle Schalter des Ziel-Hauptzustandes eingeschaltet sind.

2. Verfahren zur Steuerung bidirektionaler Schalter in Stromrichtern nach Anspruch 1,
**dadurch gekennzeichnet,**
**daß** in den Hauptzuständen (V1, V2, V3) neben der bidirektionalen Verbindung zwischen einer Soll-Eingangsphase und einer entsprechenden Ausgangsphase jeweils unidirektionale Schalter redundant geschlossenen sind, wobei in den Neben-Hauptzuständen zusätzlich einer der unidirektionalen Schalter zwischen Last und Basis-Eingangsphase eingeschaltet ist, in der Kategorie N der unidirektionale Schalter in Vorwärtsrichtung und in der Kategorie P der in Rückwärtsrichtung, und wobei sich beim Basis-Hauptzustand zusätzliche eingeschaltete unidirektionale Schalter ergeben, da in der Kategorie N alle unidirektionalen Schalter in Rückwärtsrichtung eingeschaltet sind und in der Kategorie P alle unidirektionalen Schalter in Vorwärtsrichtung.

3. Verfahren zur Steuerung bidirektionaler Schalter in Stromrichtern nach Anspruch 1 und Anspruch 2,
**dadurch gekennzeichnet,**
**daß** das Verfahren mittels Synchronisiersignalen realisiert wird, die Intervallen unveränderten Vorzeichen der Phasenspannnungen zugeordnet ist.

4. Verfahren zur Steuerung bidirektionaler Schalter in Stromrichtern nach Anspruch 1 und Anspruch 2,
**dadurch gekennzeichnet,**
**daß** das Verfahren mittels Synchronisiersignalen realisiert wird, die Intervallen im Bereich der Änderung der verketteten Spannungen zugeordnet sind.

5. Verfahren zur Steuerung bidirektionaler Schalter in Stromrichtern nach einem der vorigen Ansprüche,
**dadurch gekennzeichnet,**
**daß** beim Übergang von einem Intervall zum folgenden derjenige Hauptzustand im Zielintervall angestrebt wird, der dieselbe bidirektionale Verbindung zwischen Eingangs- und Ausgangsphase beinhaltet wie im Referenz-Hauptzustand.

6. Verfahren zur Steuerung bidirektionaler Schalter in Stromrichtern nach einem der vorigen Ansprüche,
**dadurch gekennzeichnet,**
**daß** beim Übergang von einem Intervall zum nächsten im ersten Schritt alle unidirektionalen Schalter außer die der bidirektionalen Verbindung ausgeschaltet werden und im zweiten Schritt die Redundanten für den Zielzustand eingeschaltet werden.

7. Verfahren zur Steuerung bidirektionaler Schalter in Stromrichtern nach Anspruch 1 und Anspruch 2,
**dadurch gekennzeichnet,**
**daß** das spannungsgesteuerte Zwei-Schritt-Verfahren mittels Synchronisiersignalen realisiert wird, die Intervallen unveränderten Vorzeichens der verketteten Spannungen zugeordnet sind.

## Claims

1. Method for controlling bidirectional switches in converters with separate control signals for both current directions, preferably 3x3 matrix converters,
**characterized**
**in that** a switching process from a basic main state (V1, V2, V3) to a secondary main state, and vice versa, is carried out in accordance with a voltage-controlled two-step method without using additional components which carry load current during operation, and in that, after a first step, all the unidirectional switches except for the subset comprising the reference main state and the target main state are switched off, and in that, after a second step, all the switches for the target main state are switched on.

2. Method for controlling bidirectional switches in converters according to Claim 1,
**characterized**
**in that**, in the main states (V1, V2, V3), in addition to the bidirectional connection between a nominal input phase and a corresponding output phase, unidirectional switches are in each case closed redundantly with, in the secondary main states, one of the unidirectional switches between the load and the basic input phase also being switched on, the unidirectional switch in the forward direction in category N, and that in the backward direction in category P, and with additional switched-on unidirectional switches being used in the basic main state, since all the unidirectional switches in the backward direction are switched on in category N, and all the unidirectional switches in the forward direction are switched on in category P.

3. Method for controlling bidirectional switches in converters according to Claim 1 and Claim 2,
**characterized**
**in that** the method is carried out by means of synchronization signals which are associated with intervals of unchanged mathematical sign in the phase voltages.

4. Method for controlling bidirectional switches in converters according to Claim 1 and Claim 2,
**characterized**
**in that** the method is implemented by means of synchronization signals which are associated with intervals in the region of the change in the concatenated voltages.

5. Method for controlling bidirectional switches in converters according to one of the preceding claims,
**characterized**
**in that**, on changing from one interval to the next interval, that main state is desired in the target interval which includes the same bidirectional connection between the input phase and the output phase as in the reference main state.

6. Method for controlling bidirectional switches in converters according to one of the preceding claims,
**characterized**
**in that**, in the first step during the transition from one interval to the next, all the unidirectional switches apart from those for the bidirectional connection are switched off, and, in the second step, the redundant switches for the target state are switched on.

7. Method for controlling bidirectional switches in converters according to Claim 1 and Claim 2,
**characterized**
**in that** the voltage-controlled two-step method is implemented by means of synchronization signals which are associated with intervals of unchanged mathematical sign in the concatenated voltages.

## Revendications

1. Procédé pour la commande de commutateurs bidirectionnels dans des convertisseurs de courant avec des signaux de commande séparés pour les deux sens de courant, de préférence dans des convertisseurs matriciels 3x3,
**caractérisé par le fait que**
une opération de commutation d'un état principal de base (V1, V2, V3) à un état principal auxiliaire et inversement s'effectue selon un procédé en deux étapes commandé par tension sans utiliser de composant supplémentaire conduisant normalement un courant de charge, et, après une première étape, tous les commutateurs unidirectionnels à l'exception de l'intersection de l'état principal de référence et de l'état principal d'arrivée sont hors circuit et, après une deuxième étape, tous les commutateurs de l'état principal d'arrivée sont en circuit.

2. Procédé pour la commande de commutateurs bidirectionnels dans des convertisseurs de courant selon la revendication 1,
**caractérisé par le fait que**,
dans les états principaux (V1, V2, V3), à côté de la liaison bidirectionnelle entre une phase d'entrée de consigne et une phase de sortie correspondante, des commutateurs unidirectionnels sont fermés de manière redondante et, dans les états principaux auxiliaires, l'un des commutateurs unidirectionnels est branché en plus entre la charge et la phase d'entrée de base, à savoir dans la catégorie N le commutateur unidirectionnel dans le sens direct et dans la catégorie P celui dans le sens inverse, des commutateurs unidirectionnels branchés supplémentaires résultant alors dans l'état principal de base car, dans la catégorie N, tous les commutateurs unidirectionnels sont branchés en sens inverse et, dans la catégorie P, tous les commutateurs unidirectionnels sont branchés en sens direct.

3. Procédé pour la commande de commutateurs bidirectionnels dans des convertisseurs de courant selon la revendication 1 et selon la revendication 2,
**caractérisé par le fait que**
le procédé est réalisé au moyen de signaux de synchronisation qui sont associés à des intervalles de signes inchangés des tensions de phase.

4. Procédé pour la commande de commutateurs bidirectionnels dans des convertisseurs de courant selon la revendication 1 et selon la revendication 2,
**caractérisé par le fait que**
le procédé est réalisé au moyen de signaux de synchronisation qui sont associés à des intervalles dans la plage de la modification des tensions composées.

5. Procédé pour la commande de commutateurs bidirectionnels dans des convertisseurs de courant selon l'une des revendications précédentes,
**caractérisé par le fait que**,
lors de la transition d'un intervalle au suivant, on vise dans l'intervalle d'arrivée celui des états principaux qui contient la même liaison bidirectionnelle entre phase d'entrée et phase de sortie que l'état principal de référence.

6. Procédé pour la commande de commutateurs bidirectionnels dans des convertisseurs de courant selon l'une des revendications précédentes,
**caractérisé par le fait que**,
lors de la transition d'un intervalle au suivant, dans la première étape, tous les commutateurs unidirectionnels à l'exception de ceux de la liaison bidirectionnelle sont coupés et, dans la deuxième étape, les redondants pour l'état d'arrivée sont branchés.

7. Procédé pour la commande de commutateurs bidirectionnels dans des convertisseurs de courant selon la revendication 1 et selon la revendication 2,
**caractérisé par le fait que**
le procédé en deux étapes commandé par tension est réalisé au moyen de signaux de synchronisation qui sont associés à des intervalles de signes inchangés des tensions composées.
